# EUROPÄISCHE PATENTANMELDUNG

(11) **EP 2 806 479 A1**
(43) Veröffentlichungstag der Anmeldung: **26.11.2014**
(21) Anmeldenummer: 13174263.7
(22) Anmeldetag: 28.06.2013
(51) Int. Cl.: H01M 2/10, B65F 1/00, B65F 1/08

(54) **Verfahren zur Auslegung eines Behälters für den sicheren Transport und/oder die sichere Lagerung von beschädigten und/oder defekten Hochenergiebatterien**

(30) Priorität: 24.05.2013 EP 13169140
(71) Anmelder: Stiftung Gemeinsames Rücknahmesystem Batterien, 20097 Hamburg (DE)
(72) Erfinder: Schnaas, Holger, 51109 Köln (DE)
(74) Vertreter: Albiger, Jonas

(57) **Zusammenfassung**

Es wird Verfahren zur Auslegung eines Behälters zum sicheren Transport und/oder zur sicheren Lagerung von beschädigten und/oder defekten Hochenergiebatterien vorgeschlagen, wobei der Behälter eine Kiste aufweist, wobei in der Kiste mindestens ein Fach aus Dämmplatten ausgebildet wird, wobei das mindestens eine Fach mit einem Dämmstoff ausgefüllt wird,
wobei in einem Schritt A die Behältergröße vorgegeben wird,
wobei in einem Schritt B Kistenparameter, Fachparameter, Dämmplattenparameter, und/oder Dämmstoffparameter vorgegeben werden,
wobei in einem Schritt C für den Fall des thermischen Durchgehens der Hochenergiebatterien unter Verwendung der in den Schritten A und B vorgegebenen Parameter der zeitliche Verlauf der Behälteraußenwandtemperatur berechnet wird. Außerdem wird ein Behälter vorgeschlagen, der mit einem solchen Verfahren ausgelegt wird.

## Beschreibung

### Stand der Technik

Die vorliegende Erfindung betrifft ein Verfahren zur Auslegung eines Behälters für den sicheren Transport und/oder die sichere Lagerung von beschädigten und/oder defekten Hochenergiebatterien sowie einen Behälter für den sicheren Transport und/oder die sichere Lagerung von beschädigten und/oder defekten Hochenergiebatterien.

Transportbehälter für funktionsfähige, d.h. für den bestimmungsgemäßen Gebrauch bestimmte Hochenergiebatterien sind bekannt. Von beschädigten und/odor defekten Hochenergiebatterien geht jedoch aufgrund ihrer Batterieinhaltsstoffe und/oder ihre hohen Energiedichte ein erhöhtes Risiko aus, weil z.B. infolge eines Kurzschlusses, der durch eine Erschütterung beim Transport ausgelöst werden könnte, giftige und/oder brennbare Stoffe wie Alkane, organische Lösungsmittel oder Chlorverbindungen freigesetzt werden können. Ein mögliches thermisches Durchgehen und die damit verbundene Freisetzung der immensen elektrischen Energie können die Brandgefahr zusätzlich verstärken.

Außerdem könnten die Batterien oder der Behälter selbst zerbersten, sodass unkontrolliert gefährliche Wurfstücke Menschen und Material in der Umgebung des Behälters beeinträchtigen könnten. Zudem könnte sich die Behälteraußenwand stark erhitzen, sodass eine hohe Brand- und/oder Verletzungsgefahr entstehen könnte. Daher sind z.B. Behälter zum Transport von beschädigten Lithiumionenbatterien bekannt, die eine Löschmittelsprühvorrichtung umfassen, die bei Temperatur- oder Druckanstieg im Inneren des Behälters Löschmittel im Behälter versprühen, so dass die transportierten Batterien abkühlen bzw. der Druck gemindert wird, so dass die von den Batterien ausgehende Gefahr verringert wird.

Durch die erforderliche Integration einer Löschmittelvorrichtung ist es nachteiligerweise notwendig, dass die Herstellung des Behälters vergleichsweise aufwendig und dadurch kostenintensiv ist. Außerdem muss nachteiligerweise die Funktionsfähigkeit der Löschmittelvorrichtung ständig überprüft und sichergestellt werden, sodass herkömmliche Behälter vergleichsweise wartungsintensiv sind.

Außerdem ist im Stand der Technik kein Verfahren bekannt, dass die Auslegung eines sicheren Behälters für beschädigte und/oder defekte Hochenergiebatterien ermöglicht.

Es ist daher die Aufgabe der vorliegenden Erfindung, die Nachteile des Stands der Technik zu beseitigen.

### Offenbarung der Erfindung

Diese Aufgabe wird mit dem erfindungsgemäßen Verfahren gemäß Anspruch 1 gelöst. Der Vorteil des erfindungsgemäßen Verfahrens besteht erstens darin, dass der zeitliche Verlauf der Behälteraußenwandtemperatur berechnet werden kann. Die Behälteraußenwandtemperatur ist ein Maß für die Sicherheit, die der Behälter für den Transport und/oder die Lagerung bietet. Wenn die Behälteraußenwandtemperatur vergleichsweise hoch ist, besteht erhöhte Verletzungsgefahr und Brandgefahr.

Zweitens können verschiedenste Behälterkonfigurationen vorgegeben und durchgerechnet werden. Dadurch steht nunmehr ein flexibles Auslegungsverfahren für Behälter zum sicheren Transport und/oder zur sicheren Lagerung von beschädigten und/oder defekten Hochenergiebatterien zur Verfügung.

Sicherer Transport und sichere Lagerung im Sinne dieser Patentanmeldung bedeuten, dass im Falle der Umsetzung bzw. des thermischen Durchgehens der im Behälter befindlichen Batterien keine Brandgefahr von den Batterien und vom Behälter ausgeht. Es treten weder feste Stoffe noch Flüssigkeiten aus dem Behälter aus. Es können keine Batterieteile aus dem Behälter herausgeschleudert werden. Es wird ein Zerbersten des Behälters infolge der Umsetzung der Batterien verhindert.

Bei der thermischen Umsetzung bzw. beim thermischen Durchgehen der Batterien wird innerhalb kürzester Zeit eine große Menge an Wärmeenergie frei, wodurch am Ort der Batterien eine hohe Temperatur entsteht. Die Wärme breitet sich vom Ort der Batterien aus und durchdringt die verschiedenen Schichten des Behälters von innen nach außen. Durch Modellierung der unterschiedlichen Schichten, z.B. des Dämmstoffs und der Dämmplatten, kann die Ausbreitung der Wärme berechnet werden.

Zur Berechnung werden Daten aus einer Batteriedatenbank verwendet, in der der Aufbau, die Zusammensetzung, die Form sowie die Inhaltsstoffe der Batterien hinterlegt sind. In der Batteriedatenbank sind die (reziproken) Energiedichten, die (reziproken) Energievolumina und die Inhaltsstoffe für konkrete Batteriesorten (z.B. für Li-SOCl₂ Batterien - zylindrische Bauform) hinterlegt und für die Berechnung verwendbar. Außerdem sind für die Inhaltsstoffe in der Batteriedatenbank die Dichten, die Wärmekapazitäten, die Wärmeleitkoeffizienten, die internen chemischen Energien, die externen chemischen Energien und die Heizwerte hinterlegt und für die Berechnung verfügbar. Die interne chemische Energie ist die Wärmeenergie, die bei einem thermischen Durchgehen über eine Reaktion der Batterieinhaltsstoffe (bspw. Kathode mit organischem Lösungsmittel) untereinander ohne zusätzliche Sauerstoffzufuhr (Verbrennung) von außen frei wird. Die externe chemische Energie ist die Wärmeenergie, die bei einer tatsächlichen Verbrennung an offener Luft frei wird.

Diese Daten für die konkreten Batteriesorten können z.B. den Datenblättern der Batterien entnommen worden sein. Damit ist vorteilhaft eine exakte Berechnung für konkrete Batteriesorten möglich.

Es ist aber auch möglich, dass mehrere Batteriesorten zu einer Batterieart (z.B. Lithium-Ionen Batterien) zusammengefasst werden, wodurch die Berechnung von Batteriegemischen erheblich vereinfacht werden kann. Ferner können auch worst-case Daten hinterlegt und verwendet werden, sodass vorteilhaft die Sicherheit des Behälters verbessert werden kann. Ebenfalls können Daten konkreter, herstellerspezifischer Batterien hinterlegt und verwendet werden, so dass eine optimierte Auslegung des Behälters auf diese Batterien ermöglicht werden kann.

Des Weiteren sind (reziproke) Energiedichten und (reziproke) Energievolumina in dieser Batteriedatenbank hinterlegt, die aus empirisch ermittelten Daten von Gewichten, Volumina und Abmessungen sowie Spannungen, Kapazitäten und elektrische Energien von Hochenergiebatterien abgeleitet wurden. Bei der Berechnung wird von einem 100% Ladezustand (auch "state of charge", Abkürzung SOC, genannt) der Batterien ausgegangen, d.h. die Batterien gelten als vollgeladen. Bevorzugt werden zusätzlich die höchsten empirisch ermittelten Energiedichten zur Berechnung verwendet, die besonders bevorzugt mit einem Sicherheitsfaktor beaufschlagt werden. Dadurch ist es vorteilhaft möglich, bei der Berechnung den schlimmsten Fall zu berücksichtigen, also den "worst case". Dadurch wird vorteilhaft zur Erhöhung der Sicherheit des Transports und/oder der Lagerung beigetragen. In der Batteriedatenbank sind auch die Eigenschaften möglicher Materialien von Batteriegehäusen hinterlegt.

Zur Berechnung werden zusätzlich Daten aus einer Stoffdatenbank verwendet, in der Wärmekapazitäten, Wärmeleitfähigkeiten, Dichten, Brennwerte, Reaktionsenthalpien und Molmassen verschiedener Stoffe hinterlegt sind. Bei der Berechnung werden ausgehend von der gespeicherten elektrischen Energie der Batterien als Leitkriterium unter Verwendung der Stoffdatenbank folgende Kennwerte ermittelt: Gewicht und Volumen der Batterien, Wärmekapazität der Batterien, interne und externe chemische Energie der Batterien. Aus diesen Kennwerten wird die initiale Batterietemperatur, d.h. die maximale Temperatur der Batterien bei der vollständigen Umsetzung, und die Gesamtenergie der Batterien ermittelt.

Bei dieser Berechnung wird ein Sauerstoffabschluss der Batterien zur Umgebung angenommen und daher von der kompletten Umsetzung der elektrischen Energie und internen chemischen Energie , nicht aber von der Umsetzung der externen chemischen Energie in Wärmeenergie ausgegangen. Enthalpien bei Aggregatzustandsänderungen der Batterieinhaltsstoffe, die vorübergehend Energien verbrauchen und die Wärmeentstehung mindern, werden in der Berechnung nicht betrachtet. Dadurch ist es vorteilhaft möglich, bei der Berechnung den schlimmsten Fall zu berücksichtigen, der unter Sauerstoffabschluss auftreten kann. Dadurch wird vorteilhaft zur Erhöhung der Sicherheit des Transports und/oder der Lagerung beigetragen. Weiterhin wird von einer homogenen Batteriemasse ausgegangen, sodass auch die Temperaturverteilung in der Batterie als homogen angenommen werden kann.

Das Berechnungsmodell berücksichtigt weiterhin Wärmeübergänge zwischen Schichten, wie z.B. zwischen dem Dämmstoff und den Dämmplatten, und ermöglicht die Modellierung des Wärmeabgangs an die Umgebungsluft als freie und erzwungene Konvektion. Bei der Berechnung werden die Schichten, z.B. die Dämmplatten, über die Stoffauswahl und Masse, Volumen oder Dicke modelliert. Über die Stoffdatenbank werden die Schichteigenschaften berechnet.

Bei der Berechnung werden einige grundlegende Annahmen gemacht. Die Zusammensetzungen der Schichten, z.B. der Dämmplatten, werden als homogen angenommen. Die Wärmeverteilung innerhalb der Schichten, wie z.B. in den Dämmplatten, erfolgt unmittelbar mit unendlicher Geschwindigkeit und wird als gleichmäßig, d.h. homogen, angenommen. Die Temperaturverteilung in jeweils einer Schicht wird als homogen angenommen. Die Stoffwerte der Materialien werden als konstant angenommen, d.h. es wird keine Änderung aufgrund der Temperaturerhöhung angenommen. Dabei gelten die Stoffwerte bei Standardtemperatur 0°C bzw. 25°C. Die Umgebungstemperatur wird als gleichbleibend angenommen, d.h. eine Umgebungstemperaturerhöhung wird nicht berücksichtigt.

Bei der Berechnung der Wärmeabgabe von der Behälteraußenwand an die Umgebungsluft wird von freier oder erzwungener Konvektion ausgegangen. Dabei wird von vier senkrecht angeordneten Seitenflächen und von einer waagerechten Deckenfläche, die von unten beheizt wird, ausgegangen. Hinsichtlich der erzwungenen Konvektion kann die Fluidgeschwindigkeit für die Berechnung variiert werden. Bei der Berechnung wird außerdem der Wärmeübergang von der Bodenfläche auf den Fußboden berücksichtigt, wobei der Fußboden über die Stoffauswahl, z.B. Beton, und Masse bzw. Dicke modelliert wird. Die Fußbodentemperatur wird für den Wärmeabgang als konstant in Höhe der Umgebungstemperatur angenommen.

Die Abgabe von Wärme über Wärmestrahlung wird gleich Null gesetzt, d.h. ausgeschlossen. Dadurch ist es vorteilhaft möglich, bei der Berechnung den schlimmsten Fall zu berücksichtigen, also den "worst case". Dadurch wird vorteilhaft zur Erhöhung der Sicherheit des Transports und/oder der Lagerung beigetragen.

Die Wärmeübergänge zwischen den verschiedenen Schichten, z.B. zwischen Dämmstoff und Dämmplatten, werden unter Verwendung der Temperaturdifferenzen zwischen den Schichten, thermodynamischer Gesetzmäßigkeiten und Schicht-, bzw. Stoffeigenschaften berechnet. Aus den berechneten Wärmeübergängen wird der zeitliche Verlauf der Temperaturen in den Schichten, wie z.B. in den Dämmplatten, und der Behälteraußenwandtemperatur berechnet.

Die Schritte A und B können in beliebiger Reihenfolge ausgeführt werden. Die Vorgabe der Parameter kann z.B. mit einer Eingabemaske geschehen. Die Schritte A und B müssen jedoch vor dem Schritt C ausgeführt werden.

Die Behältergröße umfasst das Behältervolumen, die Sehälteraußenmaße, die Behälterform und/oder das Behältergewicht. Vorteilhaft ist es mittels der Vorgabe der Behältergröße möglich, Raum- und/oder Gewichtsvorgaben, die beim Transport und/oder bei der Lagerung zu beachten sind, zu berücksichtigen und den Behälter entsprechend dieser Vorgaben auszulegen. Somit ist es z.B. möglich, die Behältergrößen, -volumina und/oder maximale Bruttogewichte an bestehenden Vorschriften und/oder logistischen Standards auszulegen und vorzugeben, was die Bewirtschaftung erheblich vereinfacht..

Die Kistenparameter, die Fachparameter, die Dämmplattenparameter und/oder die Dämmstoffparameter können grundsätzlich jede Eigenschaft der Kiste, des mindestens einen Fachs, der Dämmplatten und/oder des Dämmstoffs betreffen, die für die Berechnung der Behälteraußenwandtemperatur berücksichtigt werden können.

Gemäß einer bevorzugten Ausführungsform der vorliegenden Erfindung ist vorgesehen, dass aus dem zeitlichen Verlauf der Behälteraußenwandtemperatur ein Maximalwert ermittelt wird. Dadurch ist es vorteilhaft möglich, die Auslegung des Behälters und auch die Sicherheit des Behälters zu verbessern.

Vorzugsweise wird der ermittelte Maximalwert in einem Schritt D mit einem Temperaturgrenzwert, der im Falle des thermischen Durchgehens der Hochenergiebatterien nicht überschritten werden darf, verglichen, wobei in Abhängigkeit dieses Vergleichs eine Maximalbatteriemasse ermittelt wird, die in dem Behälter transportiert und/oder gelagert werden darf. Dadurch ist es vorteilhaft möglich, anzugeben, welche Batteriemasse maximal im Behälter transportiert und/oder gelagert werden darf, sodass erstens die Sicherheit gewährleistet ist und zweitens der Behälter optimal ausgelastet werden kann.

Der Temperaturgrenzwert dient der Vorgabe von sicherheitsrelevanten Randbedingungen. Daher ist es durch die Vorgabe des Temperaturgrenzwerts vorteilhaft möglich, die Sicherheitsanforderungen z.B. beim Transport auf der Straße auf einfache Weise zu berücksichtigen.

Bevorzugt wird zur Bestimmung der Maximalbatteriemasse ein Iterationsverfahren durchgeführt. Bezüglich einer Anfangsbatteriemasse wird der zeitliche Verlauf der Behälteraußenwandtemperatur berechnet. Aus dem zeitlichen Verlauf der Behälteraußenwandtemperatur wird ein Maximalwert ermittelt. Wenn der Maximalwert den Temperaturgrenzwert nicht übersteigt, wird die Batteriemasse erhöht, z.B. um 10%. Nun wird für die erhöhte Batteriemasse der Maximalwert der Temperatur an der Behälteraußenwand berechnet, wobei alle übrigen Parameter gleich bleiben wie im vorigen Iterationsschritt. Wenn der Maximalwert den Temperaturgrenzwert wieder nicht übersteigt, wird die Batteriemasse nochmals erhöht, usw. Wenn in einem Iterationsschritt der Maximalwert über dem Temperaturgrenzwert liegt, endet das Iterationsverfahren und die Maximalbatteriemasse ist diejenige Batteriemasse, die im vorletzten Iterationsschritt verwendet wurde und deren Maximalwert noch unter dem Temperaturgrenzwert lag.

Vorzugsweise ist der Temperaturgrenzwert die maximal zulässige Behälteraußenwandtemperatur. Die maximal zulässige Behälteraußenwandtemperatur kann ein vorgegebener absoluter Wert, z.B. 70°C, sein. Besonders bevorzugt ergibt sich die maximal zulässige Behälteraußenwandtemperatur aus einer Temperaturdifferenz bezüglich der Umgebungstemperatur. D.h. die maximal zulässige Behälteraußenwandtemperatur ergibt sich aus der Vorgabe, dass die maximal zulässige Behälteraußenwandtemperatur maximal 30°C höher ist als die Umgebungstemperatur. Diese Differenzvorgabe ermöglicht vorteilhaft, dass sich die maximal zulässige Behälteraußenwandtemperatur an der Umgebungstemperatur orientiert, wodurch eine Verbesserung der Sicherheit möglich ist.

Vorzugsweise liegt die maximal zulässige Temperaturdifferenz zwischen maximal zulässiger Behälteraußenwandtemperatur und Umgebungstemperatur unter 40°C, besonders bevorzugt unter 35°C und ganz besonders bevorzugt unter 30°C. Dadurch kann die Sicherheit des Behälters weiter verbessert werden.

Vorzugsweise wird bei der Berechnung in Schritt C eine Umgebungstemperatur zwischen 30°C und 50°C, bevorzugt zwischen 35°C und 45°C und besonders bevorzugt zwischen 38°C und 42°C zugrunde gelegt. Dadurch kann die Sicherheit des Behälters weiter verbessert werden.

Gemäß einer anderen bevorzugten Ausführungsform der vorliegenden Erfindung ist vorgesehen, dass der zeitliche Verlauf der Temperaturen des Dämmstoffs, der Dämmplatten und/oder der Innenverpackung berechnet wird, wobei aus diesen Verläufen Maximalwerte ermittelt werden, wobei der jeweilig ermittelte Maximalwert mit einem Temperaturgrenzwert, der im Falle des thermischen Durchgehens der Hochenergiebatterien nicht überschritten werden darf, verglichen wird, wobei in Abhängigkeit dieses Vergleichs eine Maximalbatteriemasse ermittelt wird, die in dem Behälter transportiert und/oder gelagert werden darf. Dadurch ist es vorteilhaft möglich, die Auslegung des Behälters und auch die Sicherheit des Behälters zu verbessern.

Die Temperatur des Dämmstoffs, der Dämmplatten und/oder der Innenverpackung wird im Folgenden auch Schichttemperatur genannt.

Außerdem ist es vorteilhaft möglich, anzugeben, welche Batteriemasse maximal im Behälter transportiert und/oder gelagert werden darf, sodass erstens die Sicherheit gewährleistet ist, zweitens Temperaturrestriktionen verwendeter Materialien eingehalten werden und drittens der Behälter unter den Randbedingungen optimal ausgelastet werden kann.

Der Temperaturgrenzwert dient der Vorgabe von sicherheits- und materialrelevanten Randbedingungen. Daher ist es durch die Vorgabe des Temperaturgrenzwerts vorteilhaft möglich, auf Materialrestriktionen Rücksicht zu nehmen und die Sicherheitsanforderungen z.B. beim Transport auf der Straße auf einfache Weise zu berücksichtigen.

Bevorzugt wird zur Bestimmung der Maximalbatteriemasse ein Iterationsverfahren durchgeführt. Bezüglich einer Anfangsbatteriemasse wird der zeitliche Verlauf der jeweiligen Schichttemperatur und/oder der Behälteraußenwandtemperatur berechnet. Aus dem zeitlichen Verlauf der Schichttemperatur wird ein Maximalwert ermittelt. Wenn der Maximalwert den Temperaturgrenzwert nicht übersteigt, wird die Batteriemasse erhöht, z.B. um 10%. Nun wird für die erhöhte Batteriemasse der Maximalwert der Temperatur in der jeweiligen Schicht berechnet, wobei alle übrigen Parameter gleich bleiben wie im vorigen Iterationsschritt. Wenn der Maximalwert den Temperaturgrenzwert wieder nicht übersteigt, wird die Batteriemasse nochmals erhöht, usw. Wenn in einem Iterationsschritt der Maximalwert über dem Temperaturgrenzwert liegt, endet das Iterationsverfahren und die Maximalbatteriemasse ist diejenige Batteriemasse, die im vorletzten Iterationsschritt verwendet wurde und deren Maximalwert noch unter dem Temperaturgrenzwert lag.

Es ist anzumerken, dass für die Bestimmung der Maximalbatteriemasse jedenfalls die Behälteraußenwandtemperatur berechnet wird. Für die Bestimmung der Maximalbatteriemasse können zusätzlich noch die Schichttemperaturen hinzugezogen werden. Dieses ist aber nicht zwingend erforderlich, dient jedoch vorteilhaft der sicheren Auslegung des Behälters.

Gemäß einer anderen bevorzugten Ausführungsform der vorliegenden Erfindung ist vorgesehen, dass die Kistenparameter, Fachparameter, Dämmplattenparameter und/oder Dämmstoffparameter die Wärmeleitfähigkeiten und/oder Wärmekapazitäten der Kiste, des mindestens einen Fachs, der Dämmplatten und/oder des Dämmstoffs umfassen. Dieses ermöglicht vorteilhaft die verbesserte Berechnung des zeitlichen Temperaturverlaufs.

Gemäß einer anderen bevorzugten Ausführungsform der vorliegenden Erfindung ist vorgesehen, dass bei der Berechnung in Schritt C das vollständige und gleichzeitige thermische Durchgehen der Hochenergiebatterien angenommen wird. Dadurch wird der schlimmstmögliche Fall angenommen, sodass die Sicherheit weiter verbessert werden kann.

Gemäß einer anderen bevorzugten Ausführungsform der vorliegenden Erfindung ist vorgesehen, dass in das mindestens eine Fach eine Innenverpackung, bevorzugt aus Holzmaterial und/oder Stahlmaterial, eingesetzt wird, wobei die Innenverpackung mit dem Dämmstoff gefüllt wird, wobei Innenverpackungsparameter vorgegeben werden, wobei die Berechnung in Schritt C auch in Abhängigkeit der Innenverpackungsparameter erfolgt. Durch die Innenverpackung kann die Wärmedämmung noch weiter verbessert werden, sodass die Sicherheit des Behälters weiter verbessert werden kann.

Vorzugsweise wird die Innenverpackung durch mindestens eine Einlegeplatte in mindestens zwei voneinander getrennte Kammern aufgeteilt wird, wobei die Kammern mit dem Dämmstoff ausgefüllt werden. Dadurch ist vorteilhaft eine vereinfachte Befüllung der Innenverpackung möglich.

Vorzugsweise wird, falls die Innenverpackung aus Stahl gefertigt ist, bei der Bestimmung der Maximalbatteriemasse eine maximale Temperatur der Innenverpackung von 500°C bis 700°C, bevorzugt 550°C bis 650 °C und besonders bevorzugt von 580°C bis 620°C zugrunde gelegt. Dadurch ist es vorteilhaft möglich, die Genauigkeit der Berechnung weiter zu verbessern.

Vorzugsweise wird, falls die Innenverpackung aus Holz gefertigt ist, bei der Bestimmung der Maximalbatteriemasse eine maximale Temperatur der Innenverpackung von 300°C bis 400°C, bevorzugt 300°C bis 350 °C und besonders bevorzugt von 300°C bis 320°C zugrunde gelegt. Dadurch ist es vorteilhaft möglich, die Genauigkeit der Berechnung weiter zu verbessern.

Gemäß einer anderen bevorzugten Ausführungsform werden Gasmengen berechnet, die beim thermischen Durchgehen der Batterien erzeugt werden. Dazu werden die Daten über die Batterieinhaltsstoffe aus der Batteriedatenbank verwendet. Dadurch ist es vorteilhaft möglich, die Sicherheit zu erhöhen.

Der Behälter ermöglicht bevorzugt den sicheren Transport und/oder die sichere Lagerung von Batterien mit einer Batteriemasse von 500g oder mehr. Das Volumen des Behälters bezogen auf seine Außenmaße ist bevorzugt kleiner als 2 m³, besonders bevorzugt kleiner als 1,5 m³ und ganz besonders bevorzugt kleiner als 1,1 m³. Die Länge, die Breite und die Höhe des Behälters bezogen auf die Außenmaße des Behälters sind bevorzugt kleiner als 2 m, besonders bevorzugt kleiner als 1,5 m und ganz besonders bevorzugt kleiner als 1,3 m. Dadurch ist es vorteilhaft möglich, dass die Außenmaße der Behälter den Maßen von gängigen Transport- und/oder Lagerbehältern entsprechen, sodass ein vergleichsweise einfacher Transport mit herkömmlichen Transportmitteln möglich ist.

Das mindestens eine Fach ist derart konfiguriert, dass das mindestens eine Fach die Batterien aufnimmt, wobei es sich um zwei oder mehr Batterien oder um lediglich eine einzige Batterie handeln kann.

Das mindestens eine Fach ist derart ausgebildet, dass keine festen und/oder gebundenen Stoffe austreten können. Das mindestens eine Fach ist bevorzugt korrosionsbeständig. Das mindestens eine Fach ist bevorzugt über mindestens 5 Jahre UV-beständig.

Das mindestens eine Fach ist beständig gegen Zersetzung durch aggressive Inhaltsstoffe sowie Zersetzungs- und Reaktionsprodukte. Beständig heißt, dass das mindestens eine Fach zumindest über die Dauer von 5 Jahren unter regelmäßiger Reinigung von derartigen Stoffen und Produkten nicht derart zersetzt werden kann, dass das mindestens eine Fach seine Schutz-, Isolier-, Dämm- und Abdichtungswirkung verliert.

Bevorzugt hält das mindestens eine Fach zumindest den nachfolgenden Stoffen stand: gasfömiges Hydrogenchlorid (HCl), gasförmiges Hydrogenfluorid (HF), Alkane, Alkene, organische Lösungsmittel, Thionylchlorid (SOCl₂), Sulfurylchlorid (BO₂CL₂), Phosphoroxychlorid (POCl₃), Lithiumhexafluorphosphat (LiPF₆) und Lithiumtetrafluoroborat (LiBF₄).

Das mindestens eine Fach ist derart konfiguriert, dass keine Batterieteile herausgeschleudert werden können und ein Zerbersten des mindestens einen Fachs verhindert werden kann. Das mindestens eine Fach ist derart hitzebeständig, dass die durch die Umsetzung der Batterien erzeugte Wärme nicht dazu führen kann, dass das mindestens eine Fach seine Schutz-, Isolier-, Dämm- und Abdichtungswirkung verliert. Bevorzugt ist das mindestens eine Fach hitzebeständig bis zu einer Temperatur von etwa 600°C und besonders bevorzugt bis zu einer Temperatur von etwa 1000°C. Das mindestens eine Fach ist derart konfiguriert, dass die durch die Umsetzung der Batterien entstehende Wärme keine Brandgefahr für die Außenumgebung des Behälters darstellt.

Bevorzugt ist der Behälter stapelbar ausgebildet. Es können bevorzugt zwei, besonders bevorzugt drei und ganz besonders bevorzugt mehr als drei Behälter übereinander gestapelt werden. Die Stapelhöhe beträgt bevorzugt mehr als 2 m, besonders bevorzugt mehr als 3 m. Bevorzugt weist der Behälter Elemente auf, um ein Verrutschen gestapelter Behälter zu verhindern.

Bevorzugt sind mehrere leere Behälter ineinander schachtelbar und können besonders bevorzugt geschachtelt transportiert werden. Der Behälter ist bevorzugt über Zurrösen und/oder Verankerungspunkte mit anderen Behältern, mit einer Palette und/oder in einem Lastkraftwagen verzurrbar sowie gegen unkontrolliertes Verrutschen sicherbar.

Bevorzugt weist der Behälter zur manuellen Bewegung bzw. Entleerung Halte- und/oder Griffmöglichkeiten auf. Bevorzugt weist der Behälter Unterfahr- bzw. Hebemöglichkeiten auf, um den Behälter maschinell horizontal und/oder vertikal zu bewegen und/oder zu drehen und/oder zu kippen. Bevorzugt weist der Behälter Aufnahmen für Hebezeuge wie z.B. Kräne, Lasthaken, etc. auf.

Bevorzugt ist der Behälter nach den einschlägigen Vorschriften bzgl. Transport und Lagerung (z.B. ADR) kennzeichenbar. Dazu weist der Behälter besonders bevorzugt Einschübe und/oder Fixierungsmöglichkeiten auf. Bevorzugt sind Frachtpapiere anheftbar. Bevorzugt ist der Behälter nach Ablauf der Lebensdauer einfach und ohne Spezialwerkzeug wertstoffrein trennbar und einem geeigneten Recycling zuführbar.

Bevorzugt sind die Innenflächen des Behälters bzw. des mindestens einen Fachs vergleichsweise glatt und möglichst ohne Hinterschneidungen ausgebildet, um eine möglichst vollständige Entleerung und eine einfache Reinigung zu ermöglichen. Die Reinigung von Außen- und Innenflächen ist bevorzugt mit Wasserstrahlen, Hochdruckreinigern, Schwämmen, usw. unter Zugabe von handelsüblichen Reinigungsmitteln möglich.

Bevorzugt weist der Behälter ein Ventil und/oder Entlüftungsöffnungen zum Ausgleich eines Druckunterschieds zwischen dem Druck im mindestens einen Fach und der Außenumgebung auf. Bevorzugt weist der Behälter eine Gasabführung zur Abführung giftiger/schädlicher Gase aus dem mindestens einen Fach auf. Bevorzugt weist der Behälter einen Temperaturfühler zur Messung der Temperatur im mindestens einen Fach und/oder der Behälteraußentemperatur auf.

Bevorzugt sind Scharniere, Schnittstellen und bewegliche Verbindungen des Behälters schmierungsfrei ausgelegt. Bevorzugt ist der Behälter gemäß ADR geprüft und für die Beförderung fester Stoffe in Verpackungsgruppe I zuzulassen. Besonders bevorzugt sind Fallprüfung und Stapeldruckprüfung durchgeführt worden.

Hochenergiebatterien im Sinne dieser Erfindung sind Primärbatterien mit einer Energiedichte von mehr als 0,6 MJ/kg und/oder Sekundärbatterien mit einer Energiedichte von mehr als 0,25 MJ/kg. Es kann sich insbesondere um Lithiumbatterien und/oder Metallhydridbatterien handeln. Lithiumbatterien im Sinne dieser Anmeldung umfassen alle Arten von Batterien, die Lithium enthalten, so z.B. Lithiumionenbatterien. Metallhydridbatterien im Sinne dieser Erfindung sind Batterien, die ein Metallhydrid beinhalten. Insbesondere beinhalten die Batterien Li-MnO₂, Li-SOCl₂, Li-SO₂Cl₂, Li-SO₂, Li-V₂O₅, Li-BrCl, Li-Metalloxid, Li-FePO₄ und/oder Li₂TiO₃. Batterien im Sinne dieser Erfindung umfassen auch einzelne Batteriezellen.

Beschädigt bzw. defekt ist eine Batterie, wenn sie für den bestimmungsgemäßen Gebrauch nicht mehr einsetzbar ist. Die Batterie kann eine äußere Beschädigung aufweisen, sie kann aber auch äußerlich unversehrt sein und im Inneren eine Beschädigung aufweisen.

Die Kiste im Sinne dieser Patentanmeldung kann grundsätzlich aus jedem Material sein. Die Kiste kann insbesondere aus Stahlmaterial, aus Aluminiummaterial, aus Pappe, aus Holz, insbesondere aus Naturholz und/oder aus Sperrholz, aus Kunststoff, aus faserverstärktem Kunststoff, aus glasfaserverstärktem oder karbonfaserverstärktem Kunststoff hergestellt sein. Die Kiste kann grundsätzliche jede Form haben, die es zulässt, das mindestens eine Fach in ihrem Inneren aufzunehmen.

Die Kiste ist bevorzugt derart flüssigkeitsdicht ausgebildet, dass keine gesundheits- und/oder umweltgefährdenden Flüssigkeiten austreten können. Dies gilt für ursprüngliche Inhaltsstoffe der Batterien sowie Zersetzungs- und Reaktionsprodukte.

Bevorzugt ist das mindestens eine Fach passgenau in der Kiste angeordnet. Passgenau heißt in diesem Fall, dass der verbleibende Zwischenraum zwischen der Kiste und dem mindestens einen Fach im Vergleich zu den Abmessungen der Kiste vergleichsweise gering ist. Durch eine solche passgenaue Anordnung ist es vorteilhaft möglich, dass ungewollte Bewegungen des mindestens einen Fachs vermieden werden können. Außerdem ist durch die passgenaue Ausbildung die Platzausnutzung optimierbar. Besonders bevorzugt ist das mindestens eine Fach fest mit der Kiste verbunden.

Bevorzugt ist die Kiste quaderförmig oder würfelförmig ausgebildet. Die Kiste weist vorzugsweise einen verriegelbaren Deckel auf, der geöffnet werden kann, um das mindestens eine Fach zu beladen. Zur Lagerung und/oder zum Transport kann der Deckel verschlossen werden. Vorzugsweise weist die Kiste Füße auf, damit die Kiste z.B. mit einem Gabelstapler einfach transportiert und/oder gedreht und/oder gekippt werden kann.

Das mindestens eine Fach wird aus den Dämmplatten gebildet. Zur Bildung des mindestens einen Fachs kann eine beliebige Anzahl an Dämmplatten verwendet werden. Die Dämmplatten können starr oder flexibel ausgebildet sein. Die Dämmplatten können mit festen und/oder flexiblen Deckmaterialien kaschiert sein.

Die Dämmplatten können reversibel oder irreversibel mit der Kiste verbunden sein. Irreversibel heißt, dass die Dämmplatten nur mit vergleichsweise großem Aufwand von der Kiste gelöst werden können. Reversibel heißt, dass die Dämmplatten ohne oder zumindest mit vergleichsweise geringem Aufwand von der Kiste gelöst werden können. Das mindestens eine Fach kann grundsätzlich jede Form aufweisen. Das mindestens eine Fach kann bevorzugt würfelförmig oder quaderförmig ausgebildet sein. Bevorzugt weist das mindestens eine Fach dieselbe Form auf wie die Kiste.

Bevorzugt weisen die Dämmplatten einen Wärmedurchgangskoeffizienten zwischen 0,6 und 1,0 W/m²K, besonders bevorzugt zwischen 0,6 und 0,8 W/m²K auf. Durch die Anordnung der Dämmplatten kann der Innenraum des Behälters variabel ausgebildet werden. Bevorzugt sind die Dämmplatten derart in die Kiste eingebracht, dass keine oder möglichst wenige Wärmebrücken zwischen den Dämmplatten und der Kiste entstehen. Außerdem sind die Dämmplatten miteinander derart verbunden, dass keine oder möglichst wenige Wärmebrücken zwischen den Dämmplatten entstehen.

Die Dämmplatten haben bevorzugt eine Lebensdauer von mindestens 5 Jahren. Die Dämmplatten sind bevorzugt verrottungsfest, sie zersetzen sich nicht und schimmeln auch nicht unter ungünstigen Umgebungsbedingungen. Die Dämmplatten halten bevorzugt einem Druck von bis zu 15 kN/m² dauerhaft stand. Der Behälter ist derart ausgelegt, dass die Temperatur Behälteraußenseite nicht mehr als 30°C über die Umgebungstemperatur ansteigt.

Starre Dämmplatten sind bevorzugt nicht bzw. nur gering dauerhaft verformbar und büßen ohne Verlust der Isoliereigenschaften nicht mehr als 5% ihrer Dicke ein. Flexible Dämmplatten büßen bevorzugt ohne Verlust der Isoliereigenschaften nicht mehr als 25% ihrer Dicke ein. Bevorzugt nehmen starre Dämmplatten maximal 0, 1 % ihres Volumens an Flüssigkeit auf. Flexible Dämmplatten nehmen bevorzugt maximal 1 % ihres Volumens an Flüssigkeit, insbesondere über die Umgebungsluft auf.

Gemäß einer anderen bevorzugten Ausführungsform ist vorgesehen, dass die Dämmplatten Sandwichelemente aus Stahlblech und Mineralwolle sind. Solche Sandwichelemente sind vergleichsweise günstig zu beschaffen bzw. herzustellen und bieten bei vergleichsweise geringem Gewicht eine vergleichsweise gute Dämmwirkung und Temperaturbeständigkeit. Die Sandwichelemente weisen zwei parallel zueinander angeordnete Stahlblechplatten auf, zwischen denen die Mineralwolle angeordnet ist.

Gemäß einer bevorzugten Ausführungsform ist vorgesehen, dass der Behälter die mindestens eine Innenverpackung aufweist, wobei die mindestens eine Innenverpackung in dem mindestens einen Fach angeordnet ist. Die Innenverpackung kann jegliche Art von Verpackung umfassen, die in der Lage ist, die beschädigten Batterien aufzunehmen und die von den Batterien ausgehende Gefährdung zumindest teilweise einzudämmen.

Vorzugsweise ist die Innenverpackung passgenau in das Fach eingesetzt. Passgenau heißt in diesem Fall, dass der verbleibende Zwischenraum zwischen der Innenverpackung und dem Fach im Vergleich zu den Abmessungen der Innenverpackung vergleichsweise gering ist. Durch eine solche passgenaue Anordnung ist es vorteilhaft möglich, dass ungewollte Bewegungen der Innenverpackung in dem Fach z.B. beim Transport vermieden werden können. Dadurch ist das Risiko der ungewollten Umsetzung der Batterien vergleichsweise gut verringerbar. Außerdem ist durch die passgenaue Ausbildung die Platzausnutzung optimierbar und eine ungewollte Beschädigung der Dämmplatten oder benachbarter Innenverpackungen weitestgehend vermeidbar.

Die Innenverpackung kann grundsätzlich aus jedem geeigneten Material hergestellt sein. Vorzugsweise ist die Innenverpackung flüssigkeitsdicht ausgebildet, sodass vorteilhafterweise z.B. keine aggressiven Batterieinhaltsstoffe aus der Innenverpackung austreten können. Bevorzugt ist die Innenverpackung innen wie außen korrosionsbeständig.

Vorzugsweise ist die Innenverpackung aus einem Stahlmaterial und/oder einem Holzmaterial gefertigt. Dadurch ist es vorteilhaft möglich, dass die Dämmwirkung der Innenverpackung und/oder das Gewicht und/oder die Robustheit der Innenverpackung vergleichsweise variiert werden können.

Vorzugsweise weist die Innenverpackung einen verriegelbaren Deckel auf, so dass z.B. vorteilhaft ein erleichtertes Beladen der Innenverpackung mit den Batterien möglich ist. Außerdem ermöglicht die Verriegelung des Deckels, dass im Falle der explosionsartigen Umsetzung der Batterien und/oder bei Verunfallung des Behälters ein Aufstoßen des Deckels erheblich erschwert wird, sodass einer ungewollten Ausbreitung von Hitze und gefährlichen Substanzen entgegen gewirkt wird.

Die Innenverpackung hält, falls die Innenverpackung aus einem Stahlmaterial gefertigt ist, innerhalb des Behälters den nachfolgenden Temperaturen über die angegebenen Zeiträume weitgehend formstabil stand, wobei die wesentlichen Funktionen erhalten bleiben: Die Innenverpackung hält in diesem Fall einer Temperatur von bis zu 500°C für mindestens 420 min, von bis zu 700°C für mindestens 30 min und von bis zu -30°C dauerhaft stand.

Die Innenverpackung hält, falls die Innenverpackung aus einem Holzmaterial gefertigt ist, innerhalb des Behälters den nachfolgenden Temperaturen über die angegebenen Zeiträume weitgehend formstabil stand, wobei die wesentlichen Funktionen erhalten bleiben: Die Innenverpackung hält in diesem Fall einer Temperatur von bis zu 300°C für mindestens 300 min, von bis zu 400°C für mindestens 30 min und von bis zu -30°C dauerhaft stand.

Die Innenverpackung hält bevorzugt zumindest den nachfolgenden Stoffen bei regelmäßiger Reinigung dauerhaft stand, d.h. die wesentlichen Funktionen der Innenverpackung werden nicht durch die nachfolgend aufgelisteten Stoffe beeinträchtigt: gasförmiges Hydrogenchlorid (HCl), gasförmiges Hydrogenfluorid (HF), Alkane, Alkene und organische Lösungsmittel. Außerdem hält die Innenverpackung noch den nachfolgenden Stoffen stand: Thionylchlorid (SOCl₂), Sulfurylchlorid (SO₂CL₂), Phosphoroxychlorid (POCl₃), Lithiumhexafluorphosphat (LiPF₆), Lithiumtetrafluoroborat (LiBF₄).

Die Innenverpackung hat bevorzugt mindestens eine Lebensdauer von 5 Jahren. Die Innenverpackung ist bevorzugt dauerhaft UV-beständig und versprödet auch unter UV-Einwirkung nicht. Bevorzugt sind mehrere leere Innenverpackungen ineinander schachtelbar und können besonders bevorzugt geschachtelt transportiert werden. Bevorzugt weist die Innenverpackung zur manuellen Bewegung bzw. Entleerung Halte- und/oder Griffmöglichkeiten auf.

Bevorzugt weist die Innenverpackung Aufnahmen für Hebezeuge wie z.B. Kräne, Lasthaken, etc. auf. Bevorzugt ist die Innenverpackung nach den einschlägigen Vorschriften bzgl. Transport und Lagerung (z.B. ADR) kennzeichenbar. Bevorzugt sind die Frachtpapiere anheftbar. Bevorzugt ist die Innenverpackung nach Ablauf der Lebensdauer einfach und ohne Spezialwerkzeug wertstoffrein trennbar und einem geeigneten Recycling zuführbar.

Bevorzugt sind die Innenflächen der Innenverpackung vergleichsweise glatt und möglichst ohne Hinterschneidungen ausgebildet, um eine möglichst vollständige Entleerung und eine einfache Reinigung zu ermöglichen. Die Reinigung von Außen- und Innenflächen ist bevorzugt mit Wasserstrahlen, Hochdruckreinigern, Schwämmen, usw. unter Zugabe von handelsüblichen Reinigungsmitteln möglich.

Bevorzugt weist die Innenverpackung ein Ventil und/oder Entlüftungsöffnungen zum Ausgleich eines Druckunterschieds im Vergleich zur Umgebung auf. Bevorzugt sind Scharniere, Schnittstellen und bewegliche Verbindungen schmierungsfrei ausgelegt. Bevorzugt ist die Innenverpackung gemäß ADR geprüft und für die Beförderung fester Stoffe in Verpackungsgruppe I zugelassen. Besonders bevorzugt sind Fallprüfung und Stapeldruckprüfung durchgeführt und bestanden.

Gemäß einer anderen bevorzugten Ausführungsform ist vorgesehen, dass die Innenverpackung vollständig mit dem Dämmstoff aufgefüllt ist. Der Dämmstoff kann z.B. ein Schüttgut sein, das in die Innenverpackung eingefüllt wird. Der Dämmstoff ist bevorzugt luftabschließend, luftverdrängend, inert, saugfähig, bindefähig und/oder stoßhemmend. Der Dämmstoff ist lose und in Schüttung um die Batterien herum gefüllt.

Der Dämmstoff verhindert vorteilhaft eine ungewollte Bewegung der Batterien in der Innenverpackung und ermöglicht eine vergleichsweise gute Dämmung bei ungewollter Umsetzung der Batterien. Der Dämmstoff wird derart in die Innenverpackung eingebracht, dass möglichst keine Wärmebrücken zu den Einlegeplatten und/oder der Innenverpackung entstehen.

Vorzugsweise ist der Dämmstoff ein Sandgemisch, besonders bevorzugt ein Sand-Vermiculit-Gemisch. Alternativ kann der Dämmstoff zu mehr als 90 Gew%, bevorzugt mehr als 95 Gew%, besonders bevorzugt mehr als 99 Gew% aus Vermiculit oder Perlit bestehen. Besonders bevorzugt wird die Batterie von einer mehr als 10 mm dicken Dämmstoffschicht eingefasst. Dieses erhöht vorteilhaft eine gleichmäßige Dämmwirkung des Dämmstoffs. Bevorzugt ist der Dämmstoff korrosionsbeständig.

Der Dämmstoff hält innerhalb des Behälters den nachfolgenden Temperaturen über die angegebenen Zeiträume formstabil stand, wobei die wesentlichen Funktionen erhalten bleiben: Der Dämmstoff hält einer Temperatur von bis zu 1200°C für mindestens 10 min, von bis zu 1000°C für mindestens 30 min, von bis zu 700°C für mindestens 240 min und von bis zu -30°C dauerhaft stand.

Bevorzugt ist der Dämmstoff inert und reagiert nicht, zumindest nicht exotherm, mit mindestens den nachfolgenden Stoffen: gasförmiges Hydrogenchlorid (HCl), gasförmiges Hydrogenfluorid (HF), Alkane, Alkene, organische Lösungsmittel, Thionylchlorid (SOCl₂), Sulfurylchlorid (SO₂CL₂), Phosphoroxychlorid (POCl₃), Lithiumhexafluorphosphat (LiPF₆), Lithiumtetrafluoroborat (LiBF₄).

Bevorzugt ist der Dämmstoff in trockenem Zustand nicht elektrisch leitend. Besonders bevorzugt ist der Dämmstoff elektrisch isolierend. Bevorzugt bindet der Dämmstoff auslaufende Batterieinhaltsstoffe, insbesondere Elektrolyte, derart, dass keine bzw. zumindest nur vergleichsweise geringe elektrische Leitfähigkeit entsteht. Bevorzugt umschließt der Dämmstoff die Batterien derart, dass die Luft- bzw. Sauerstoffzufuhr zu den Batterien unterbunden wird und Luft wirksam verdrängt wird. Bevorzugt hat der Dämmstoff selbst und/oder in Verbindung mit der Innenverpackung branderstickende Wirkung.

Der Dämmstoff ist bevorzugt verrottungsfest. Er zersetzt sich nicht und schimmelt auch unter ungünstigen Umgebungsbedingungen nicht. Der Dämmstoff ist bevorzugt UV-beständig, d.h. auch unter UV-Einwirkung verliert er seine wesentlichen Eigenschaften nicht. Bevorzugt ist der Dämmstoff mindestens 5 Jahre, besonders bevorzugt unbegrenzt lagerungsfähig, ohne seine wesentlichen Eigenschaften zu verlieren. Bevorzugt ist der Dämmstoff nach seiner Lebensdauer ohne Spezialwerkzeug von den Einlegeplatten wertstoffrein trennbar und einem geeigneten Recycling zuführbar. Dabei ist von durch Batterleinhaltsstoffe verunreinigten und von feuchten oder sauberen Dämmstoffen auszugehen.

Bevorzugt nimmt der Dämmstoff mindestens das Zweifache, besonders bevorzugt mindestens das Dreifache und ganz besonders bevorzugt mehr als das Vierfache seines Eigengewichts an Flüssigkeit auf und bindet diese. Der Dämmstoff nimmt bevorzugt auf und bindet: Alkane, Alkene, organische Lösungsmittel, Thionylchlorid (SOCl₂), Sulfurylchlorid (SO₂CL₂), Phosphoroxychlorid (POCl₃), Lithiumhexafluorphosphat (LiPF₆), Lithiumtetrafluoroborat (LiBF₄) sowie Lösungen dieser Stoffe.

Gemäß einer anderen bevorzugten Ausführungsform der vorliegenden Erfindung ist vorgesehen, dass die Innenverpackung die mindestens eine Einlegeplatte aufweist, wobei die mindestens eine Einlegeplatte die Innenverpackung in mindestens zwei voneinander getrennte Kammern aufteilt. Bevorzugt weist die mindestens eine Einlegeplatte eine Haupterstreckungsebene auf und die mindestens eine Einlegeplatte ist derart angeordnet, dass die Haupterstreckungsebene vertikal oder horizontal angeordnet ist. Die Innenverpackung kann auch zwei oder mehr Einlegeplatten aufweisen. Dadurch ist die Innenverpackung vorteilhaft in eine Vielzahl an Kammern unterteilbar. Die Kammern können gleich groß sein, sie können aber auch unterschiedlich groß sein. Die Einlegeplatten sind bevorzugt senkrecht zueinander angeordnet.

Vorzugsweise weist die mindestens eine Einlegeplatte eine Nut auf, in die eine andere Einlegeplatte eingesteckt werden kann, die ebenfalls mit einer entsprechenden Nut versehen ist. Die Einlegeplatte kann auch zwei oder mehr Nuten aufweisen. Vorzugsweise weist die Einlegeplatte eine perforierte Nutvorbereitung auf. Bei Bedarf kann vorteilhaft die perforierte Nutvorbereitung leicht ausgedrückt werden, sodass die Einlegeplatte flexibel an den Einsatzzweck angepasst werden und zugleich die Fertigung der Einlegeplatten vereinfacht werden kann. Die Einlegeplatte kann auch zwei oder mehr perforierte Nutvorbereitungen aufweisen.

Bevorzugt ist die Einlegeplatte formstabil ausgestaltet. Bevorzugt ist die Einlegeplatte passgenau in die Innenverpackung eingebracht. Bevorzugt schließt die Einlegeplatte formschlüssig mit der Innenverpackung ab. Die Einlegeplatte hält innerhalb des Behälters einer Temperatur von bis zu 1200°C mindestens 10 min, von bis zu 1000°C mindestens 30 min, von bis zu 700°C mindestens 240 min und von bis zu -30°C dauerhaft stand. Der Wärmeleitkoeffizient der Einlegeplatte beträgt maximal 3,5 W/m²K.

Die Einlegeplatte hält bevorzugt zumindest den nachfolgenden Stoffen dauerhaft stand, d.h. die wesentlichen Funktionen der Einlegeplatte werden nicht durch die nachfolgend aufgelisteten Stoffe beeinträchtigt: gasförmiges Hydrogenchlorid (HCl), gasförmiges Hydrogenfluorid (HF), Alkane, Alkene und organische Lösungsmittel. Außerdem hält die Einlegeplatte noch den nachfolgenden Stoffen stand: Thionylchlorid (SOCl₂), Sulfurylchlorid (SO₂CL₂), Phosphoroxychlorid (POCl₃), Lithiumhexafluorphosphat (LiPF₆), Lithiumtetrafluoroborat (LiBF₄).

Bevorzugt ist die Einlegeplatte korrosionsbeständig. Die Einlegeplatte ist bevorzugt verrottungsfest und sie zersetzt sich nicht. Sie schimmelt auch nicht unter ungünstigen Umgebungsbedingungen. Die Einlegeplatte ist bevorzugt UV-beständig, d.h. auch unter UV-Einwirkung verliert sie ihre physikalischen Eigenschaften und Isoliereigenschaften nicht. Die Einlegeplatte ist unter Druckeinwirkung nicht bzw. nur gering dauerhaft verformbar und büßt ohne Verlust der Isoliereigenschaften nicht mehr als 20% ihrer Dicke ein.

Bevorzugt nimmt die Einlegeplatte mindestens 10% ihres Volumens an Flüssigkeit auf und bindet diese. Die Einlegeplatte nimmt bevorzugt auf und bindet: Alkane, Alkene, organische Lösungsmittel, Thionylchlorid (SOCl₂), Sulfurylchlorid (SO₂CL₂), Phosphoroxychlorid (POCl₃), Lithiumhexafluorphosphat (LiPF₆), Lithiumtetrafluoroborat (LiBF₄) sowie Lösungen dieser Stoffe.

Bevorzugt ist die Einlegeplatte mindestens 5 Jahre, besonders bevorzugt unbegrenzt lagerfähig, ohne ihre wesentlichen Eigenschaften zu verlieren. Bevorzugt ist die Einlegeplatte in ihrer Verkaufsverpackung stapelbar. Bevorzugt ist die Einlegeplatte nach ihrer Lebensdauer ohne Spezialwerkzeug von der Innenverpackung und/oder dem Dämmstoff wertstoffrein trennbar und einem geeigneten Recycling zuführbar. Dabei ist von durch Batterieinhaltsstoffe verunreinigten und von feuchten oder sauberen Dämmstoffen auszugehen.

Bevorzugt ist die Einlegeplatte aus Steinwolle. Durch die Verwendung von Steinwolle für die Einlegeplatte ist es vorteilhaft möglich, das Gewicht der Einlegeplatte vergleichsweise gering zu halten und zugleich eine vergleichsweise gute Dämmwirkung und Temperaturbeständigkeit zu erhalten.

Die mindestens zwei Kammern sind derart voneinander getrennt, dass keine direkte Verbindung zwischen den beiden Kammern besteht. Die Einlegeplatte behindert vorteilhaft den direkten Wärmeübergang von einer Kammer in die benachbarte Kammer. Bevorzugt ist die Einlegeplatte derart in die Innenverpackung eingebracht, dass Wärmebrücken zwischen den Kammern vermieden werden.

Durch die Einlegeplatte ist es vorteilhaft möglich, dass die Innenverpackung ihrerseits weiterhin aufgeteilt werden kann, so dass sich eine flexible Anpassung der Größe der Kammern an die transportierten Batterien ermöglichen kann, so dass eine flexible Reaktion auf unterschiedlichste Anforderungen von zu transportierenden Batterien möglich ist. So ist es z.B. möglich, die zu transportierenden Batterien auf zwei Kammern aufzuteilen, so dass das Gefährdungspotenzial der Batterien weiter verringert werden kann.

Gemäß einer anderen vorteilhaften Ausführungsform der vorliegenden Erfindung ist vorgesehen, dass der Behälter in der Kiste eine Vielzahl von voneinander getrennten Fächern aufweist. Der Behälter kann daher nicht nur ein Fach, sondern auch zwei oder mehr Fächer aufweisen. Die Fächer werden durch die Dämmplatten gebildet. Zur Bildung der Fächer können die Dämmplatten in jeder Position und in jeder Lage angeordnet werden. Bevorzugt sind die Dämmplatten horizontal und/oder vertikal angeordnet.

Die Fächer können alle gleich groß sein, sie können aber auch unterschiedliche Größen aufweisen. Die Fächer können jede beliebige Form haben, bevorzugt sind die Fächer würfelförmig oder quaderförmig.

Es können alle Fächer mit einer Innenverpackung beladen sein, es können auch nur einige Fächer mit einer Innenverpackung beladen sein. Die nicht mit einer Innenverpackung beladenen Fächer können z.B. mit einem Dummy ausgefüllt sein. Es können aber auch Fächer direkt, d.h. ohne Innenverpackung, mit Batterien und Dämmstoff befüllt sein. In diesem Fall können diese Fächer auch direkt durch eine Einlegeplatte oder mehrere Einlegeplatten in Kammern unterteilt sein.

Die Anzahl der Fächer, Größe der Fächer und/oder die Form der Fächer können durch die Anzahl, Größe und Anordnung der Dämmplatten bestimmt werden. Dieses kann in Abhängigkeit der zu transportierenden/lagernden Batterien geschehen. Dadurch ist der Behälter flexibel an jede Transportanforderung anpassbar und es ist eine flexible, schnelle und optimale Auslegung des Behälters möglich.

Gemäß einer anderen bevorzugten Ausführungsform der vorliegenden Erfindung ist vorgesehen, dass die Kiste eine Gitterbox, bevorzugt mit einem verriegelbaren Deckel, ist. Mit Gitterbox ist hiermit eine herkömmliche Gitterbox gemeint, die zum Transport und/oder zum Lagern von beliebigen Gütern verwendet werden kann.

Gemäß einer anderen bevorzugten Ausführungsform ist vorgesehen, dass die Dämmplatten zusammengesteckt sind. Es ist somit vorteilhaft keine Schweißverbindung zur Verbindung der Dämmplatten notwendig. Dieses vereinfacht die Fertigung des mindestens einen Fachs erheblich. Durch diese Steckverbindung können Dämmplatten vergleichsweise einfach miteinander verbunden werden bzw. auch wieder voneinander gelöst werden.

Damit ist eine vergleichsweise einfache Fertigung des Behälters möglich. Außerdem kann der Behälter vergleichsweise einfach umgebaut werden. Vorzugsweise weisen die Dämmplatten Nuten auf. Jede einzelne Dämmplatte kann eine oder mehrere Nuten aufweisen. Nuten, die nicht verwendet werden, können durch Verschlussstopfen verschlossen sein. Die Nuten können jede Form und jede Größe haben. Die Nuten können beliebig angeordnet sein. Die Nuten können mit jedem geeigneten Bearbeitungsverfahren in die Dämmplatten eingebracht werden. Bevorzugt sind die Nuten in die Dämmplatten gefräst. Es können aber auch andere Verfahren zur Erzeugung der Nuten verwendet werden.

Diese Nuten können zum einen vorteilhaft bewirken, dass die Wärmeübertragung innerhalb der Dämmplatten behindert werden kann, weil z.B. Wärmebrücken unterbrochen werden können. Die Nuten unterbrechen die Oberfläche der Dämmplatte und verhindern so die ungestörte Leitung von Wärme in der Dämmplatte.

Außerdem dienen die Nuten vorteilhaft zur Verbindung der Dämmplatten miteinander, weil die Dämmplatten in die entsprechenden Nuten der anderen Dämmplatten eingesteckt werden können. Dadurch ist eine vergleichsweise einfache Verbindung der Dämmplatten zur Bildung des Fachs möglich.

Die Dämmplatten können auch über Schienen miteinander verbunden werden. Außerdem können auch Stifte und Stiftaufnahmen an den Dämmplatten vorgesehen sein, sodass die Stifte einer Dämmplatte in Stiftaufnahmen anderer Dämmplatten gesteckt werden können.

Ein weiterer Gegenstand der vorliegenden Erfindung betrifft einen Behälter zum sicheren Transport und/oder zur sicheren Lagerung von beschädigten und/oder defekten Hochenergiebatterien, wobei der Behälter eine Kiste aufweist, wobei in der Kiste mindestens ein Fach aus Dämmplatten ausgebildet wird, wobei das mindestens eine Fach mit einem Dämmstoff ausgefüllt wird, wobei der Behälter mit einem Verfahren gemäß einem der vorhergehenden Ausführungsformen ausgelegt wird.

Im Übrigen gelten die obigen Ausführungen auch für den Behälter.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen schematisch
Fig. 1 einen Behälter gemäß einer beispielhaften Ausführungsform der vorliegenden Erfindung,
Fig. 2a, 2b, 2c eine Dämmplatte des Behälters in drei unterschiedlichen Ansichten,
Fig. 3a, 3b, 3c, 3d jeweils eine detaillierte Ansicht von zwei miteinander verbundenen Dämmplatten,
Fig. 4 eine Innenverpackung,
Fig. 5a, 5b jeweils eine Einlegeplatte und
Fig. 6 ein Ablaufdiagramm des erfindungsgemäßen Verfahrens gemäß einer beispielhaften Ausführungsform.

### Ausführungsform(en) der Erfindung

In den verschiedenen Figuren sind gleiche Teile stets mit den gleichen Bezugszeichen versehen und werden daher auch in der Regel jeweils nur einmal benannt bzw. erwähnt.

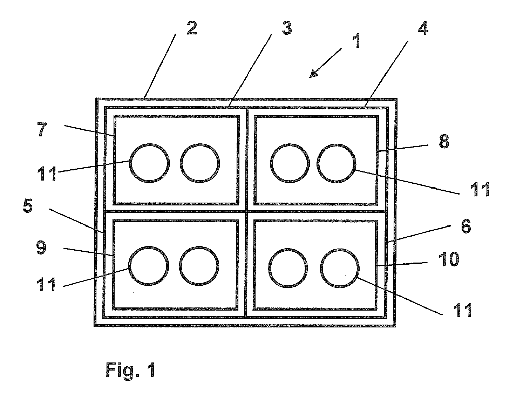

Figur 1 zeigt schematisch einen Behälter 1 gemäß einer beispielhaften Ausführungsform der vorliegenden Erfindung. Der Behälter 1 weist eine Kiste 2 auf. Die Kiste 2 ist mit einem nicht dargestellten Deckel verschließbar.

Der Behälter 1 weist vier Fächer 3, 4, 5, 6 auf. Der Behälter 1 ist quaderförmig ausgebildet. Die Fächer 3, 4, 5, 6 sind aus Dämmplatten gebildet.

Am Boden der Fächer 3, 4, 5, 6 ist eine Bodenplatte (nicht dargestellt) horizontal angeordnet. An der Decke der Fächer 3, 4, 5, 6 ist eine Deckplatte (im Folgenden auch Dachplatte genannt) (nicht dargestellt) horizontal angeordnet.

Zur Bildung der Fächer 3, 4, 5, 6 sind weitere Dämmplatten vertikal angeordnet. Vier seitliche Dämmplatten, die die Außenbegrenzung der Fächer 3, 4, 5, 6 bilden, und Dämmplatten, die die Fächer 3, 4, 5, 6 voneinander trennen und die Innenbegrenzung der Fächer 3, 4, 5, 6 bilden.

In den Fächern 3, 4, 5, 6 sind jeweils eine Innenverpackung 7, 8, 9, 10 angeordnet. Die Innenverpackungen 7, 8, 9, 10 sind quaderförmig ausgebildet. Hierbei handelt es sich vorzugsweise um Stahlkisten. In jeder Innenverpackung 7, 8, 9, 10 sind jeweils zwei Batterien 11 angeordnet. Vorzugsweise kann sich in jeder Innenverpackung 7, 8, 9, 10 weiterhin ein Dämmstoff befinden. Vorzugsweise ein Sandgemisch.

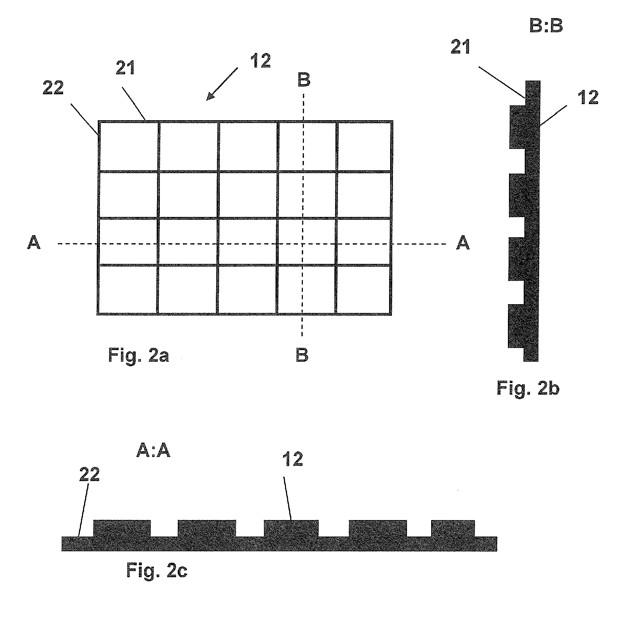

Die Figuren 2a, 2b, 2c zeigen jeweils eine Bodenplatte 12 des Behälters 1.

Figur 2a zeigt schematisch eine Draufsicht auf die Bodenplatte 12. Die Bodenplatte 12 ist rechteckig ausgebildet. Die Bodenplatte 12 weist vier waagerecht verlaufende Nuten 21 und sechs senkrecht verlaufende Nuten 22 auf.

Figur 2b zeigt schematisch die Darstellung eines Schnittes entlang der Linie B:B. Die Figur 2b zeigt die Nuten 21, die in die Bodenplatte eingebracht sind. Figur 2c zeigt schematisch die Seitenansicht des Schnittes entlang der Linie A:A. In die Bodenplatte 12 sind die Nuten 22 eingebracht.

Diese Bodenplatte 12 ermöglicht eine flexible Gestaltung des Behälters 1, weil die Bodenplatte durch die Nuten 21, 22 derart vorbereitet ist, dass die Dämmplatten einfach in die Nuten eingesteckt werden können, so dass auf effiziente Art und Weise durch Einstecken von Dämmplatten eine Vielzahl an Fächern ausgebildet werden können.

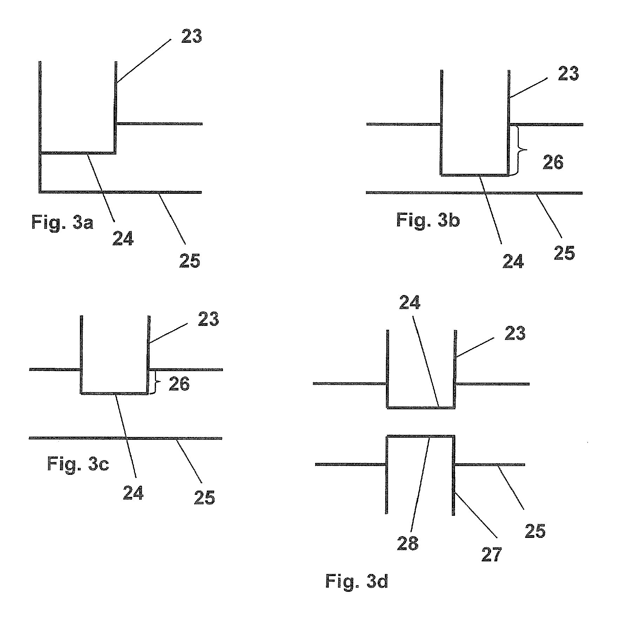

Die Figuren 3a, 3b, 3c zeigen schematisch, wie Dämmplatten 23, 25 bzw. 23, 25 und 27 miteinander verbunden sein können.

Figur 3a zeigt die Dämmplatte 23 und die Dämmplatte 25. Die Dämmplatte 23 ist in eine Nut 24, die in der Dämmplatte 25 ausgebildet ist, eingesteckt. Die Tiefe der Nut kann je nach Bedarf variiert werden. Außerdem ermöglicht die Nut vorteilhaft, dass Wärmebrücken verhindert werden können. Diese Verbindung der Dämmplatten kann z.B. verwendet werden, um äußere Dämmplatten miteinander zu verbinden. Äußere Dämmplatten sind Dämmplatten, die das Fach nach Außen abschließen.

Figur 3b zeigt schematisch eine andere Verbindung der Dämmplatte 23 und der Dämmplatte 25. Während in Figur 3a eine Eckverbindung zwischen zwei außenliegenden Dämmplatten dargestellt ist, zeigt Figur 3b die äußere Dämmplatte 25 und die innere Dämmplatte 23, die über die Nut 24 zusammengesteckt sind. Figur 3b zeigt auch, dass die Dämmplatte 23 derart in die Nut 24 eingesteckt ist, dass die Nuttiefe 26 bzw. die Eindringtiefe der Dämmplatte 23 in die Dämmplatte 25 vergleichsweise hoch ist.

Figur 3c zeigt die Verbindung der Dämmplatte 23 mit der Dämmplatte 25, wobei die Dämmplatte 23 nicht so tief wie in Figur 3b in die Platte 25 eingesteckt ist. Die Nut 24 besitzt eine vergleichsweise geringere Tiefe 26 als in Figur 3b gezeigt. Falls eine vergleichsweise stabile Verbindung der Dämmplatten untereinander erforderlich ist, so wie in Figur 3b dargestellt, so wird die Nut 24 vergleichsweise tief ausgebildet, so dass die Nuttiefe 26 über mehr als die Hälfte der Dicke der Dämmplatte 25 hinausgeht.

Falls lediglich eine geringere Stabilität der Verbindung der Dämmplatten 23, 25 erforderlich ist, so reicht es aus, dass die Nuttiefe 26 vergleichsweise gering ausgebildet ist.

Figur 3d zeigt schematisch die Dämmplatten 23 und 25 sowie eine weitere Dämmplatte 27. Die Dämmplatte 23 und die Dämmplatte 27 sind beide in die Dämmplatte 25 eingesteckt. Dazu ist die Dämmplatte 23 in die Nut 24 in der Dämmplatte 25 eingesteckt. Die Dämmplatte 27 ist in die Nut 28 in der Dämmplatte 25 eingesteckt. Figur 3d zeigt daher eine Steckverbindung der Dämmplatten wie sie im Inneren des Behälters bzw. zwischen innenliegenden Fächern angeordnet sein können.

Die Steckverbindung über die Nuten ist hier nur beispielhaft. Es können auch andere Möglichkeiten zur Verbindung der Dämmplatten untereinander vorgesehen sein.

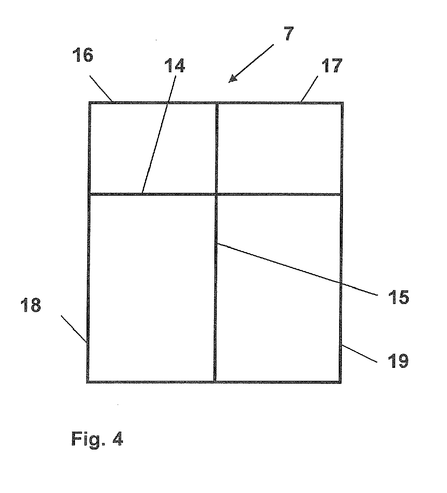

Figur 4 zeigt schematisch eine Innenverpackung 7 des Behälters 1. Die Innenverpackung 7 weist eine erste Einlegeplatte 14 und eine zweite Einlegeplatte 15 auf. Diese Einlegeplatten 14, 15 sind kreuzartig in der Innenverpackung 7 angeordnet. Die Innenverpackung ist mit einem rechteckigen Querschnitt ausgebildet. Die erste Einlegeplatte 14 verläuft parallel zu der kurzen Seite der Innenverpackung 7 und die zweite Einlegeplatte 15 verläuft parallel zu der langen Seite der Innenverpackung 7. Die Einlegeplatten 14, 15 unterteilen die Innenverpackung 7 in vier Kammern 16, 17, 18, 19. Die Kammern 16, 17, 18, 19 sind rechteckig ausgebildet. In jeder dieser Kammern 16, 17, 18 19 können Batterien transportiert bzw. gelagert werden. Außerdem können in den Kammern 16, 17, 18, 19 Dämmstoffe eingebracht werden.

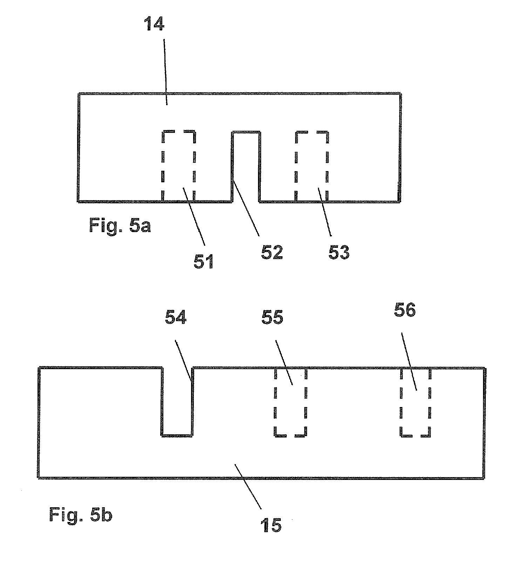

Figur 5a zeigt schematisch die erste Einlegeplatte 14 in einer Seitenansicht. Die Einlegeplatte 14 weist eine Nut 52 auf sowie zwei perforierte Nutvorbereitungen 51, 53, die hier gestrichelt dargestellt sind. Je nach Anforderung kann die Nutvorbereitung entfernt werden, so dass die Einlegeplatten flexibel an die zu transportierenden Batterien angepasst werden können.

Figur 5b zeigt schematisch die zweite Einlegeplatte 15 in einer Seitenansicht. Ähnlich wie die erste Einlegeplatte 14 in Figur 5a, weist die zweite Einlegeplatte 15 eine Nut 54 auf sowie zwei perforierte Nutvorbereitungen 55, 56. Wie schon zu Figur 5a ausgeführt, können bei Bedarf die Vorbereitungen 55, 56 entfernt werden, um die Einlegeplatten an die entsprechende Transportanforderung anpassen zu können.

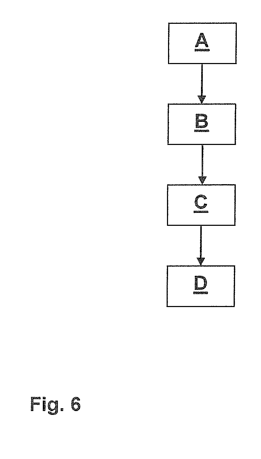

Figur 6 zeigt schematisch ein Ablaufdiagram des erfindungsgemäßen Verfahrens gemäß einer beispielhaften Ausführungsform. Im Verfahrensschritt A wird zunächst eine Behältergröße vorgegeben. Dies können z.B. die Behältermaße Breite x Höhe x Tiefe von 1 m x 1 m x 1 m sein. Außerdem wird im Verfahrensschritt A ein Behältergewicht vorgegeben.

Danach werden im Verfahrensschritt B folgende Parameter festgelegt: Die Dämmplatten umfassen Sandwichplatten von 60 mm Dicke mit Steinwolle, die eine mittlere Wärmeleitfähigkeit von 4,2 * 10⁻⁷ kJ/(cm*K*s) und eine mittlere Wärmekapazität von 5,0 * 10⁻⁴ kJ/(g*K) sowie eine Dichte von 0,33 g/cm³ aufweisen. Die Innenverpackung umfasst eine Kiste aus Stahlblech mit einer Dicke von 2mm, die eine mittlere Wärmeleitfähigkeit von 5,3 * 10⁻⁴ kJ/(cm*K*s) und eine mittlere Wärmekapazität von 4,9 * 10⁻⁴ kJ/(g*K) sowie eine Dichte von 7,88 g/cm³ aufweist. Als Dämmstoff wird ein Trockensand-Vermiculit-Gemisch vorgegeben. Dieses hat eine mittlere Wärmeleitfähigkeit von 2,78 * 10⁻⁶ kJ/(cm*K*s) und eine mittlere Wärmekapazität von 8,58 * 10⁻⁴ kJ/(g*K) sowie eine Dichte von 1,22 g/cm³.

Danach wird im Verfahrensschritt C für den Fall des thermischen Durchgehens der Hochenergiebatterien 11 unter Verwendung der in den Schritten A und B vorgegebenen Parameter der zeitliche Verlauf der Behälteraußenwandtemperatur berechnet.

Danach wird ein Temperaturgrenzwert vorgegeben. Dies kann z.B. durch die Vorgabe geschehen, dass die Differenz zwischen der Behälteraußenwandtemperatur und der Umgebungstemperatur 30°C bzw. 30 K nicht übersteigen darf. Als Umgebungstemperatur wird 40°C vorgegeben. Der Temperaturgrenzwert ist dann die maximal zulässige Behälteraußenwandtemperatur von 70°C.

Nun wird in Schritt D die Maximalbatteriemasse, die transportiert und/oder gelagert werden darf, berechnet. Dazu wird für Primärbatterien eine reziproke Energiedichte von 0,35 g/kJ bzw. 0,18 cm³/kJ und für Sekundärbatterien eine reziproke Energiedichte von 1,00 g/kJ bzw. 0,35 cm³/kJ angenommen. Es wird davon ausgegangen, dass die gesamte Batteriemasse zeitgleich umsetzt bzw. thermisch durchgeht.

Es läuft in Schritt D ein Iterationsprozess ab, mit dem man ausgehend von einer Anfangsbatteriemasse die Maximalbatteriemasse bestimmt. Zunächst wird ausgehend von der Anfangsbatteriemasse unter Berücksichtigung aller Vorgaben aus Schritt A und B der zeitliche Temperaturverlauf an der Behälteraußenwand ermittelt und ein Maximalwert angegeben. Der Maximalwert wird mit dem Temperaturgrenzwert verglichen. Wenn der Maximalwert kleiner als 70°C ist, wird im Iterationsprozess die Anfangsbatteriemasse um einen bestimmten Betrag, z.B. 10%, erhöht. Mit diesem erhöhten Batteriemassenwert wird im nächsten Iterationsschritt der zeitliche Temperaturverlauf an der Behälteraußenwand ermittelt und ein Maximalwert angegeben. Wenn der Maximalwert kleiner als 70°C ist, wird im Iterationsprozess die Batteriemasse erneut um einen bestimmten Betrag, z.B. 10%, erhöht. Dieser Iterationsprozess läuft solange ab, bis der Maximalwert größer als 70°C ist. Dann stoppt das Verfahren. Die Maximalbatteriemasse ist dann derjenige Wert, für den der Maximalwert noch kleiner 70°C war.

### Bezugszeichenliste

- 1: Behälter
- 2: Kiste
- 3: Erstes Fach
- 4: Zweites Fach
- 5: Drittes Fach
- 6: Viertes Fach
- 7: Erste Innenverpackung
- 8: Zweite Innenverpackung
- 9: Dritte Innenverpackung
- 10: Vierte Innenverpackung
- 11: Batterien
- 12: Dämmplatte, Bodenplatte
- 14: Erste Einlegeplatte
- 15: Zweite Einlegeplatte
- 16: Erste Kammer
- 17: Zweite Kammer
- 18: Dritte Kammer
- 19: Vierte Kammer
- 21: Nut
- 22: Nut
- 23: Dämmplatte
- 24: Nut
- 25: Dämmplatte
- 26: Nuttiefe
- 27: Dämmplatte
- 28: Nut
- 51: perforierte Nutvorbereitung
- 52: Nut
- 53: perforierte Nutvorbereitung
- 54: Nut
- 55: perforierte Nutvorbereitung
- 56: perforierte Nutvorbereitung
- A: Verfahrensschritt
- B: Verfahrensschritt
- C: Verfahrensschritt
- D: Verfahrensschritt

## Patentansprüche

1. Verfahren zur Auslegung eines Behälters (1) zum sicheren Transport und/oder zur sicheren Lagerung von beschädigten und/oder defekten Hochenergiebatterien (11), wobei der Behälter (1) eine Kiste (2) aufweist, wobei in der Kiste (2) mindestens ein Fach (3, 4, 5, 6) aus Dämmplatten (12, 20, 23, 25, 27) ausgebildet wird, wobei das mindestens eine Fach (3, 4, 5, 6) mit einem Dämmstoff ausgefüllt wird,
wobei in einem Schritt A die Behältergröße vorgegeben wird,
wobei in einem Schritt B Kistenparameter, Fachparameter, Dämmplattenparameter, und/oder Dämmstoffparameter vorgegeben werden,
wobei in einem Schritt C für den Fall des thermischen Durchgehens der Hochenergiebatterien (11) unter Verwendung der in den Schritten A und B vorgegebenen Parameter der zeitliche Verlauf der Behälteraußenwandtemperatur berechnet wird.

2. Verfahren nach Anspruch 1, **dadurch gekennzeichnet, dass** aus dem zeitlichen Verlauf der Behälteraußenwandtemperatur ein Maximalwert ermittelt wird.

3. Verfahren nach Anspruch 2, **dadurch gekennzeichnet, dass** in einem Schritt D der ermittelte Maximalwert mit einem Temperaturgrenzwert, der im Falle des thermischen Durchgehens der Hochenergiebatterien (11) nicht überschritten werden darf, verglichen wird, wobei in Abhängigkeit dieses Vergleichs eine Maximalbatteriemasse ermittelt wird, die in dem Behälter (1) transportiert und/oder gelagert werden darf.

4. Verfahren nach einem der Ansprüche 2 oder 3, **dadurch gekennzeichnet, dass** der Temperaturgrenzwert die maximal zulässige Behälteraußenwandtemperatur ist.

5. Verfahren nach einem der vorhergehenden Ansprüche, **dadurch gekennzeichnet, dass** die Kistenparameter, Fachparameter, Dämmplattenparameter und/oder Dämmstoffparameter die Wärmeleitfähigkeiten und/oder Wärmekapazitäten der Kiste, des mindestens einen Fachs (3, 4, 5, 6), der Dämmplatten (12, 20, 23, 25, 27) und/oder des Dämmstoffs umfassen.

6. Verfahren nach einem der vorhergehenden Ansprüche, **dadurch gekennzeichnet, dass** bei der Berechnung in Schritt C das vollständige und gleichzeitige thermische Durchgehen der Hochenergiebatterien (11) angenommen wird.

7. Verfahren nach einem der vorhergehenden Ansprüche, **dadurch gekennzeichnet, dass** eine maximal zulässige Temperaturdifferenz zwischen maximal zulässiger Behälteraußenwandtemperatur und Umgebungstemperatur unter 40°C, bevorzugt unter 35°C und besonders bevorzugt unter 30°C liegt.

8. Verfahren nach einem der vorhergehenden Ansprüche, **dadurch gekennzeichnet, dass** bei der Berechnung in Schritt C eine Umgebungstemperatur zwischen 30°C und 50°C, bevorzugt zwischen 35°C und 45°C und besonders bevorzugt zwischen 38°C und 42°C zugrunde gelegt wird.

9. Verfahren nach einem der vorhergehenden Ansprüche, **dadurch gekennzeichnet, dass** der zeitliche Verlauf der Temperaturen des Dämmstoffs, der Dämmplatten (12, 20, 23, 25, 27) und/oder der Innenverpackung (7, 8, 9, 10) berechnet wird, wobei aus diesen Verläufen Maximalwerte ermittelt werden, wobei der jeweilig ermittelte Maximalwert mit einem Temperaturgrenzwert, der im Falle des thermischen Durchgehens der Hochenergiebatterien nicht überschritten werden darf, verglichen wird, wobei in Abhängigkeit dieses Vergleichs eine Maximalbatteriemasse ermittelt wird, die in dem Behälter (1) transportiert und/oder gelagert werden darf.

10. Verfahren nach einem der vorhergehenden Ansprüche, **dadurch gekennzeichnet, dass** der Dämmstoff ein Sandgemisch, bevorzugt ein Sand-Vermiculit-Gemisch ist.

11. Verfahren nach einem der vorhergehenden Ansprüche, **dadurch gekennzeichnet, dass** der Dämmstoff zu 95 Gew%, bevorzugt zu 98 Gew% und besonders bevorzugt zu mehr als 99 Gew% aus Vermiculit oder Perlit besteht.

12. Verfahren nach einem der vorhergehenden Ansprüche, **dadurch gekennzeichnet, dass** in das mindestens eine Fach (3, 4, 5, 6) eine Innenverpackung (7, 8, 9, 10), bevorzugt aus Holzmaterial und/oder Stahlmaterial, eingesetzt wird, wobei die Innenverpackung (7, 8, 9, 10) mit dem Dämmstoff gefüllt wird, wobei Innenverpackungsparameter vorgegeben werden, wobei die Berechnung in Schritt C auch in Abhängigkeit der Innenverpackungsparameter erfolgt.

13. Verfahren nach einem der vorhergehenden Ansprüche, **dadurch gekennzeichnet, dass** die Innenverpackung aus einem Stahlmaterial gefertigt ist und bei der Bestimmung einer Maximalbatteriemasse eine maximale Temperatur der Innenverpackung (7, 8, 9, 10) von 500°C bis 700°C, bevorzugt 550°C bis 650 °C und besonders bevorzugt von 580°C bis 620°C zugrunde gelegt wird.

14. Verfahren nach einem der vorhergehenden Ansprüche, **dadurch gekennzeichnet, dass** die Innenverpackung aus einem Holzmaterial gefertigt ist und bei der Bestimmung einer Maximalbatteriemasse eine maximale Temperatur der Innenverpackung (7, 8, 9, 10) von 300°C bis 400°C, bevorzugt 300°C bis 350 °C und besonders bevorzugt von 300°C bis 320°C zugrunde gelegt wird.

15. Behälter (1) zum sicheren Transport und/oder zur sicheren Lagerung von beschädigten und/oder defekten Hochenergiebatterien (11), wobei der Behälter (1) eine Kiste (2) aufweist, wobei in der Kiste (2) mindestens ein Fach (3, 4, 5, 6) aus Dämmplatten (12, 20, 23, 25, 27) ausgebildet wird, wobei das mindestens eine Fach (3, 4, 5, 6) mit einem Dämmstoff ausgefüllt wird, wobei der Behälter (1) mit einem Verfahren gemäß einem der vorhergehenden Ansprüche ausgelegt wird.
